(19) Europäisches Patentamt

European Patent Office

Office européen des brevets

(11) **EP 1 507 372 A1**

(12) **EUROPEAN PATENT APPLICATION**

(43) Date of publication:
**16.02.2005 Bulletin 2005/07**

(51) Int Cl.⁷: **H04L 12/56**, H04Q 7/38

(21) Application number: **04254640.8**

(22) Date of filing: **02.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.08.2003 JP 2003293731**

(71) Applicant: **Sony Ericsson Mobile Communications Japan, Inc.
Tokyo (JP)**

(72) Inventor: **Bazar, Isman,
Sony Ericsson Mobile Communi. Japan
Tokyo (JP)**

(74) Representative: **Horner, David Richard et al
D Young & Co
120 Holborn
London EC1N 2DY (GB)**

(54) **Forwarding of acknowledged traffic volume in HSDPA UMTS**

(57)    A radio network system comprises a mobile station (UE), a base station (Node-B) to make radio communication with the mobile station, and a base station controller (RNC). The base station transmits data to the mobile station (step S16). The base station then receives delivery acknowledgment information returned from the mobile station (step S17). At this time, the base station collects the amount of data, i.e., traffic, transmitted to the mobile station (step S18). This can realize data delivery services in an operation mode capable of fast and high realtime performance. In addition, it is possible to compute the total amount of delivered data and provide charging.

FIG. 1

## EP 1 507 372 A1

**Description**

<u>Technical Field</u>

The present invention relates to a radio communication system capable of delivering signals to mobile stations via a base station and relates to a repeating apparatus to repeat signals between a mobile station and a radio communication controller.

<u>Background of the Invention</u>

The packet communication service provided by FOMA (registered trademark), one of third generation (3G) cellular phone systems, uses an apparatus (hereafter referred to as a traffic collection apparatus) having the function (IWF: inter working function) to collect traffic. This apparatus receives packet delivery acknowledgment (ACK) from a mobile station (UE) via a base station (Node-B). Then, the apparatus counts the number of communication packets downstream to the mobile station and collects the number of counted packets as the traffic corresponding to the total amount of communication data for mobile station users.

The packet delivery acknowledgment is performed on the link protocol (RLC: radio link control protocol) layer. Accordingly, an operation mode for the RLC protocol is selected to be acknowledged mode (AM). In consideration for this, chargeable services such as data delivery services are limited to the RLC acknowledged data transfer mode, i. e., an operation mode capable of exchanging delivery acknowledgment information (STATUS PDU).

Patent document 1 is Japanese Translation of Unexamined PCT Appln. No. 2000-503825

Patent document 1 describes the technology known as an example of charging systems in the second generation cellular phone service earlier than the third generation equivalent. The charging system described in patent document 1 allows a packet data terminal apparatus (user's cellular phone terminal) to perform packet communication via a base station. Service supply nodes, gateway support nodes, and the like are connected to a mobile communication network and collect traffic concerning the amount of network utilization. The collected traffic is used to charge users.

As mentioned above, charging services in the third generation cellular phone system are feasible only in the RLC acknowledged data transfer mode.

However, the RLC acknowledged data transfer mode uses the link protocol layer for the packet delivery acknowledgment. Data delivery starts after the packet delivery acknowledgment. If the packet delivery acknowledgment fails, for example, RLC retransmission may occur to cause a delay between apparatuses in the network. In such case, the throughput degrades. Accordingly, the RLC acknowledged data transfer mode is not always suited for data delivery services that require high realtime performance.

In the future, an increasing demand is anticipated for data delivery services requiring fast and high realtime performance such as delivery services of video streaming data. From this viewpoint, it is expected to realize data delivery services using the other operation modes that can provide faster and higher realtime performance than the RLC acknowledged data transfer mode. It is considered to be indispensable to collect traffic corresponding to the total amount of communication data during the data delivery using operation modes other than the RLC acknowledged data transfer mode.

<u>Brief Summary of the Invention</u>

Embodiments of the present invention provide a radio communication system and a repeating apparatus that can realize a data delivery service in another operation mode to ensure faster and higher realtime performance than an operation mode capable of exchanging delivery acknowledgment information using the link protocol layer, collect the total amount of data delivered by the data delivery service, and realize a charging process based on the total amount of data.

An embodiment of the present invention provides a radio communication system comprising a mobile station, a base station, and a radio communication controller. The base station comprises: radio communication means for making radio communication with the mobile station; response signal reception means for interacting with signal transmission to the mobile station and receiving a response signal returned from the mobile station; collection means for, when a signal is transmitted to the mobile station and then a response signal returned from the mobile station is received, collecting the amount of signal transmitted to the mobile station; and controller interface means for making signal communication with the radio communication controller and transmitting the amount of signal collected by the collection means to the radio communication controller.

According to one embodiment of the present invention, the base station collects the amount of signal based on a response signal from the mobile station. That is to say, this embodiment does not aim at collecting the amount of data during data delivery conditioned on delivery acknowledgment in a higher layer like the link protocol layer using the RLC acknowledged data transfer mode in a third generation cellular phone system, for example. This embodiment collects the amount of data in the base station, i.e., a lower layer such as the physical layer.

According to one embodiment of the present invention, the base station collects the amount of signal based on a response signal from the mobile station. The embodiment can therefore realize a data delivery service in an operation mode to ensure faster and higher realtime performance than the operation mode capable of exchanging delivery acknowledgment information using the link protocol layer in the third generation cellular phone system, for example. At the same time, it is possible to collect the total amount of data delivered by the data delivery service. Consequently, this embodiment of the present invention also makes it possible to realize a charging process based on the total amount of collected signals.

Further particular and preferred aspects of the present invention are set out in the accompanying independent and dependent claims. Features of the dependent claims may be combined with features of the independent claims as appropriate, and in combinations other than those explicitly set out in the claims.

Brief Description of the Drawings

The present invention will be described further, by way of example only, with reference to preferred embodiments thereof as illustrated in the accompanying drawings, in which:

FIG. 1 is a time flowchart showing a flow of data delivery and traffic collection processes in a radio network system according to an embodiment of the present invention;
FIG. 2 shows parameters used for the traffic collection process according to the embodiment;
FIG. 3 diagrams a traffic management table used for the traffic collection process according to the embodiment;
FIG. 4 shows a flow of data sent from a radio access network (UTRAN) to a mobile station (UE) in the radio network system according to the embodiment;
FIG. 5 shows a time flowchart between the radio access network and the mobile station in the radio network system according to the embodiment;
FIG. 6 is a flowchart showing in detail the data delivery and the traffic collection process at step S5 in FIG. 1;
FIG. 7 is a flowchart showing a base station controller's process in the traffic collection process;
FIG. 8 is a flowchart showing a base station's process in the traffic collection process; and
FIG. 9 is a functional block diagram showing an overall configuration of the base station according to the embodiment.

Detailed Description of Embodiments of the Invention

A radio communication system (radio network system) and a repeating apparatus (base station) is described according to one embodiment of the present invention. As an example, the description presents the HSDPA (high speed downlink packet access) system in R5 (release 5) of 3GPP (3rd generation partnership project) that is a standardization project for the third generation cellular phone system.

An R5 HSDPA service assumes the use of RLC unacknowledged data transfer mode (unacknowledge mode: UM) for the delivery service of video streaming data and the like. If the data delivery can be realized by using the RLC UM, it is possible to minimize a delay between apparatuses in the network due to retransmission of RLC in the RLC acknowledged data transfer mode (AM), for example. It is considered to be able to provide data delivery services with the high realtime performance. The embodiment adopts a packet switching service using the RLC UM compliant with the R5 HSDPA. Consequently, it is possible to realize a data delivery service having faster (higher-throughput) and higher realtime performance than the conventional operation mode capable of exchanging delivery acknowledgment information using the link protocol layer.

The RLC UM for the unacknowledged link protocol layer is one of protocol modes applicable to packet switching services and is presently used only for non-traffic data bearers. Starting a packet switching data delivery service using the RLC UM requires a system configuration to charge data to be exchanged in the RLC UM. For this reason, one embodiment according to the present invention uses the configuration (to be described later) to realize packet switched charging for data exchanged in the RLC UM, i.e., charging corresponding to the amount of data exchanged. The RLC UM exchanges data in both directions upstream and downstream. Charging only downstream data counts the number of packets of data whose delivery is acknowledged by mobile stations.

In order to ensure data transfer acknowledgment between the mobile station and the base station, the R5 HSDPA uses a hybrid automatic repeat request (HARQ) in the physical layer to exchange ACK (acknowledge) or NACK (non-acknowledge) information. Accordingly, the embodiment allows an R5 HSDPA service compliant with 3GPP to use the ACK/NACK information for HARQ in the physical layer and enables traffic collection in the RLC unacknowledged data transfer mode (RLC UM) which is unavailable in R99 (release 99).

The following describes operations of the radio network system according to an embodiment of the present invention with reference to the accompanying drawings.

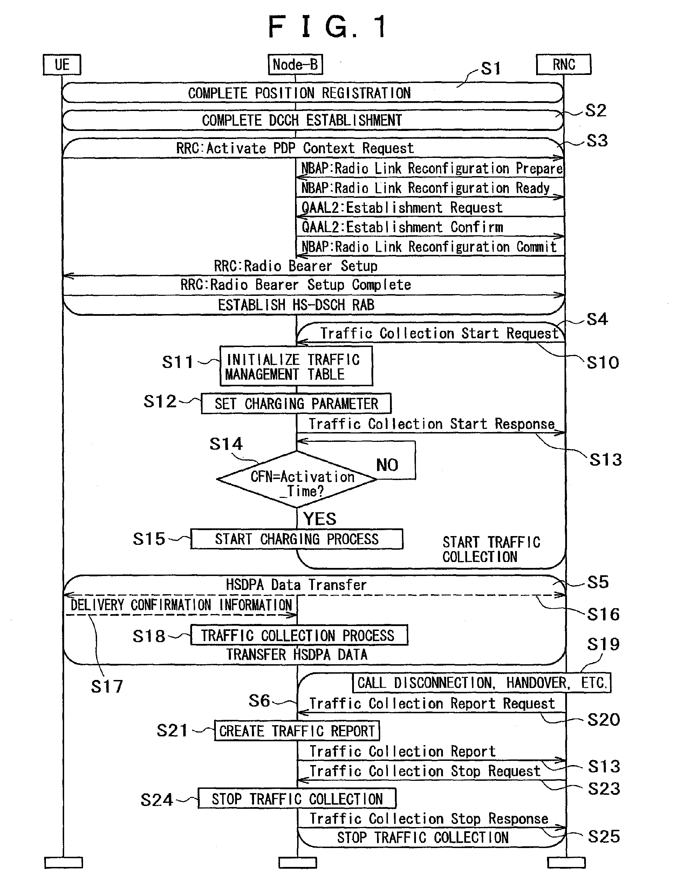

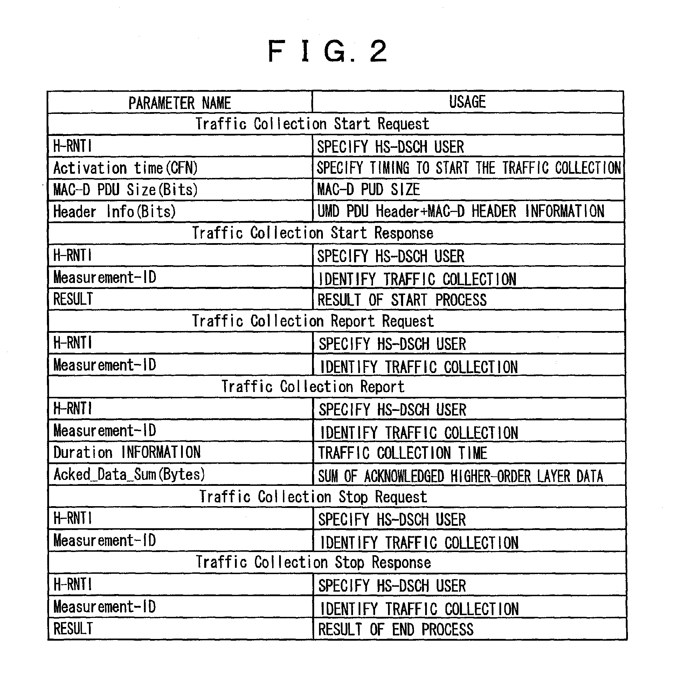

FIG. 1 shows a time flow (time arrows). FIG. 2 shows parameter names and their usage. With reference to FIGS. 1 and 2, the following describes packet switched data delivery using the RLC UM according to the R5 HSDPA and traffic collection operations using the ACK/NACK information for HARQ according to the embodiment of the present invention.

At step S1, the radio network system according to the embodiment performs a process for position registration between a mobile station (UE), a base station (Node-B) functioning as a repeating apparatus, and a base station controller (radio network controller: RNC) functioning as a radio communication controller. At step S2, the radio network system performs a process to establish a DCCH (dedicated control channel) for an SRB (signaling radio bearer). If the SRB DCCH establishment (control signal bearer establishment) is complete at step S2, the radio network system performs a process to establish a radio bearer (RAB) for an HS-DSCH (high speed-downlink shared channel) at step S3. During the HSDPA radio bearer establishment at step S3, the base station controller (RNC) determines an RLC operation mode for the HSDPA RAB. The position registration at step S1, the control signal bearer establishment at step S2, and the HSDPA radio bearer establishment comply with the 3GPP call establishment sequence. The detailed description about these processes is omitted here for simplicity.

Upon completion of the processes at steps S1 through S3, the radio network system according to the embodiment starts a traffic collection process at step S4.

When control proceeds to the traffic collection process at step S4, the base station controller sends a start request (Traffic Collection Start Request) to the base station at step S10. That is to say, the start request is configured to be a control signal (traffic collection start request control signal) for the base station controller to notify the base station with various information elements used in the traffic collection process. During the start request (Traffic Collection Start Request), the base station controller sends the following parameters to the base station as shown in FIG. 2: H-RNTI (HS-DSCH radio network temporary ID) to specify an HS-DSCH user; CFN (connection frame number) to specify timing to start the traffic collection; MAC-D PDU Size composed of a plurality of bits representing the size of MAC (medium access control) -D PDU (Protocol Data Unit); and Header Info composed of a plurality of bits representing a UMD PDU (unacknowledged mode data PDU) header and an MAC-D header.

When receiving the above-mentioned start request, the base station, at step S11, generates and initializes a traffic management table to collect and manage traffic in units of mobile stations. Traffic needs to be collected in units of mobile stations. For this reason, the base station according to the embodiment identifies the mobile station ID. Based on the mobile station ID, the base station creates and manages the traffic management table so as to collect and manage traffic in units of mobile stations. Specifically, the R5 system to which the embodiment is applied provides an H-RNTI for each user (i.e., each mobile station) to receive HSDPA compliant data delivery services. The base station provides the traffic management table to collect and manage the traffic in units of H-RNTI for each mobile station. The base station manages information to be stored in the traffic management table.

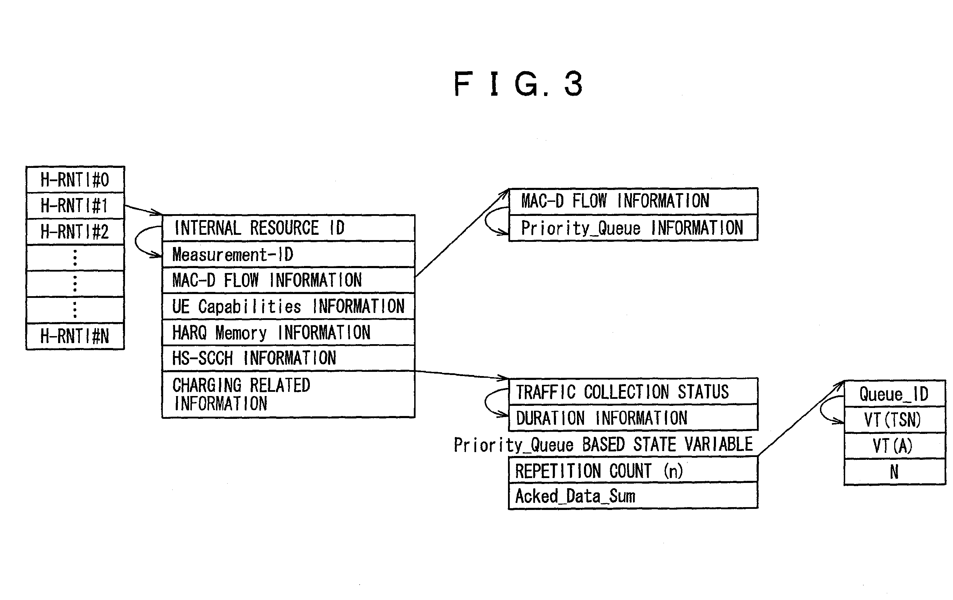

FIG. 3 shows an example traffic management table for collecting and managing traffic based on the H-RNTI in units of mobile stations. In FIG. 3, the traffic management table is given numbers (H-RNTI#0 through H-RNTI#N) in units of H-RNTI. Corresponding to each H-RNTI number, the table stores an internal resource ID, Measurement-ID, MAC-D FLOW information, UE Capabilities information, HARQ Memory information, HS-SCCH information, and charging related information. The MAC-D FLOW comprises its MAC-D FLOW information and Priority_Queue information. The charging related information comprises traffic collection status, Duration information, and a Priority_Queue based state variable. There are Priority_Queue based state variables in proportion to the number of Priority_Queues. The traffic collection status indicates a state of traffic collection whether the traffic collection is in process (active), stops (inactive), or is unsuccessful (NG). The Duration information indicates the traffic collection time from a charging process start CFN or a charging process start time to a charging process stop CFN or a charging process stop time. The Priority_Queue based state variable indicates a transmission state. Repetition count (n) indicates the number of Priority_Queues. The Priority_Queue based state variable comprises Queue_ID, VT (TSN) , VT (A) , and N. Queue_ID provides an ID of Priority_Queue. VT(TSN) indicates a sequence number (TSN) of packet data (MAC-HS PDU) to be transmitted next. VT (A) indicates a delivery acknowledged TSN. N indicates the total number of MAC-D PDUs to be multiplexed into one MAC-HS PDU. N comprises $N_1 + N_2 + N_3 + ... + N_n$, where $N_1$, $N_2$, $N_3$, $\cdots$, and $N_n$ indicate the number of MAC-D PDUs each having different sizes (SID_n). Acked_Data__Sum indicates the total number of bytes for higher layer data (PDCP/RTP PDU) which is acknowledged downstream.

Now back to FIG. 1, when completing creation and initialization of the traffic management table, the base station sets charging parameters at step S12. Specifically, the base station places parameters to be obtained by HSDPA RAB setup (RL reconfiguration prepare/ready/commit) and traffic collection start request parameter values in the traffic management table.

At step S13, the base station sends a start response (Traffic Collection Start Response) to the base station controller. At step S14, the base station determines the CFN. When the CFN reaches Activation_Time for the HSDPA RAB (CFN = Activation_Time), the base station starts the traffic collection process at step S15. At the time of the start response (Traffic Collection Start Response), the base station sends H-RNTI, Measurement-ID identifying the traffic collection process, and RESULT indicating a start result to the base station controller as shown in FIG. 2.

At step S5, the radio network system according to the embodiment starts transferring HSDPA data downstream almost simultaneously with the traffic collection start process in the base station. At step S16 in step S5, the system transfers HSDPA data downstream (HSDPA Data Transfer). At step S17, the mobile station sends delivery acknowledgment information (response signal ACK) to the base station. At step S18, the base station receives the delivery acknowledgment information to collect the traffic.

At step S6, the radio network system according to the embodiment stops collecting the traffic. The process to stop the traffic collection at step S6 is performed when a call disconnection occurs at step S19, when handover occurs in an HS-DSCH, or when there occurs a process to stop the charging process (e.g., MAC reset process). When receiving a trigger to stop the charging process such as the call disconnection request or the handover, the base station controller issues a traffic collection request (Traffic Collection Report Request) to the base station at step S20. At the time of the traffic collection request (Traffic Collection Report Request) , the base station controller sends H-RNTI and Measurement-ID to the base station as shown in FIG. 2.

When receiving the traffic collection request, the base station creates a traffic collection report at step S21. The traffic collection report contains Acked_Data_Sum up to the time when the traffic collection request was issued and also contains the Duration information indicating the traffic collection execution time. At step S22, the base station sends the traffic collection report to the base station controller (Traffic Collection Report). At the time of Traffic Collection Report, the base station sends H-RNTI, Measurement-ID, and the Duration information and Acked_Data_Sum contained in the traffic collection report to the base station controller as shown in FIG. 2.

When receiving the traffic collection report, the base station controller sends Traffic Collection Stop Request to the base station at step S23. At the time of Traffic Collection Stop Request, the base station controller sends H-RNTI and Measurement-ID to the base station as shown in FIG. 2.

When receiving the traffic collection stop request, the base station stops collecting the traffic at step S24. Then, at step S25, the base station returns Traffic Collection Stop Response to the base station controller. At the time of Traffic Collection Stop Response, the base station sends H-RNTI, Measurement-ID, and RESULT showing a stop result to the base station controller as shown in FIG. 2.

Thereafter, the base station controller transfers the traffic collection report to a charging apparatus (not shown) that charges users.

There has been described the flow of data delivery and traffic collection in the radio network system according to an embodiment of the present invention. The following describes detailed flows of the data delivery and the traffic collection process.

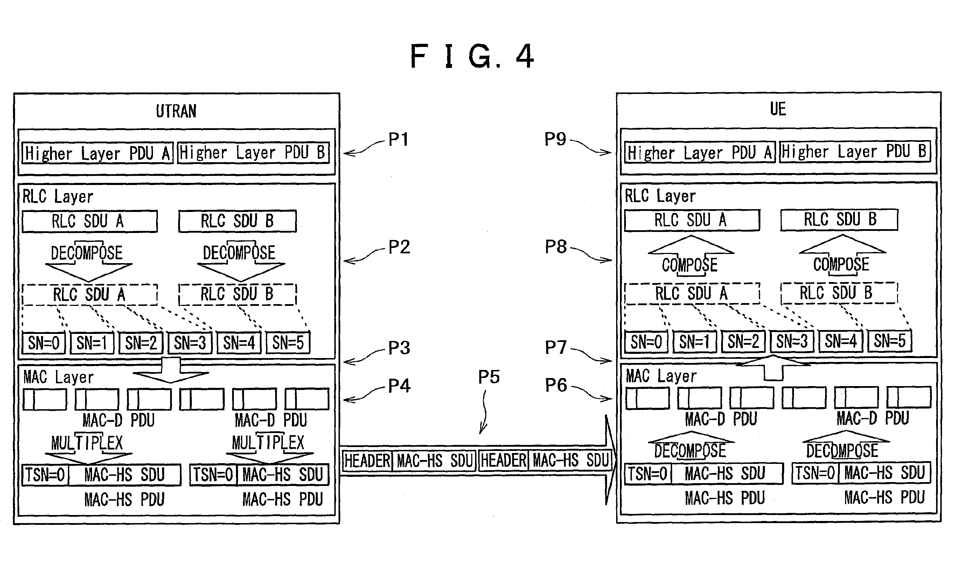

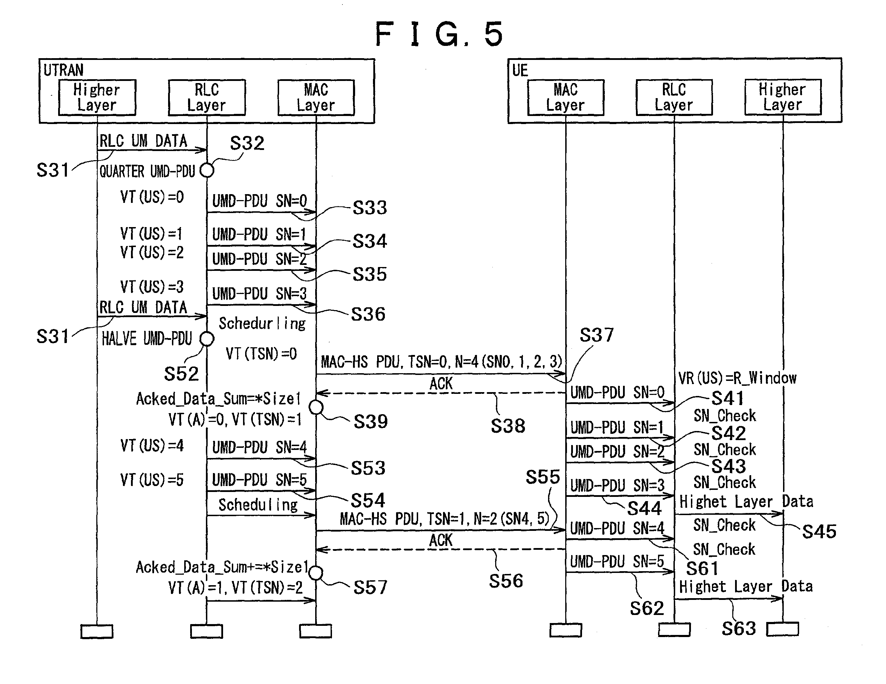

With reference to FIGS. 4 and 5, the following describes sequences of the data delivery and the traffic collection process at step S5 in FIG. 1. FIG. 4 shows a flow of data sent from a radio access network (UTRAN) to a mobile station (UE) in 3GPP. FIG. 5 shows a time flowchart between the radio access network and the mobile station. In FIGS. 4 and 5, the base station controller is responsible for processes of higher layers (Higher Layer, L3 layer, L2/PDCP/RTP layer) and RLC layer (L2 layer) in the radio access network. The base station is responsible for processes of MAC layer (L2 layer) in the radio access network. Though not shown in FIGS. 4 and 5, the layers for the base station and the mobile station include PHY layers (physical layer and L1 layer) lower than the MAC layer.

Though not shown in the sequences of FIGS. 4 and 5, the mobile station sends the following to the radio access network in advance: a service request for a data delivery service according to HSDPA and H-RNTI for the mobile station to receive the data delivery service. Data requested by the mobile station is supplied to the radio access network from delivery data supply apparatuses (not shown) such as a data delivery service provider and the like. The radio access network determines a method of processing data to be sent to the mobile station based on information such as packet sizes the mobile station can receive. FIGS. 4 and 5 show an example of delivering two data units PDU A and PDU B from the radio access network to the mobile station. The two data units PDU A and PDU B are assumed to be realtime critical data such as video streaming data.

In process P1 of FIG. 4 and at step S31 of FIG. 5, the base station controller passes data unit PDU A on the Higher Layer as RLC UM for RLC SDU (Service Data Unit) A to the RLC layer.

In process P2 of FIG. 4 and at step S32 in FIG. 5, the base station controller decomposes the RLC SDU A into a plurality of fixed-size packet data units (UMD-PDUs: unacknowledge mode-PDUs) in consideration for packet sizes the mobile station can handle. In the examples of FIGS. 4 and 5, RLC SDU A is quartered. To ensure the so-called In-Sequence Delivery transfer at this time, the base station controller assigns packet sequence numbers (SN=0 through SN=3) to the decomposed UMD-PDUs. In process P3 of FIG. 4 and at step S33 to S36 of FIG. 5, the base station controller passes the UMD-PDUs in order of the SNs to the MAC layer, i.e., the base station.

In process P4 of FIG. 4, the base station composes the UMD-PDUs into MAC-D PDU in the MAC layer. The base station multiplexes the MAC-D PDU into an MAC-HS transmission unit (MAC-HS PDU) , and then attaches header information to the MAC-HS PDU. In process P5 of FIG. 4 and at step S37 of FIG. 5, the base station sends the MAC-HS PDU to the mobile station from the PHY layer. At this time, a base station's scheduler determines the number of MAC-D PDUs to be sent to the mobile station in consideration for a resource state, propagation environment, and the like at each transmission timing (TTI). Further, the scheduler communicates with the mobile station to appropriately change an error correction process, modulation method, and the like.

When receiving the MAC-HS PDU from the base station, the mobile station issues HARQ delivery acknowledgment (ACK) in units of MAC-HS PDUs at step S38 of FIG. 5. The base station buffers UMD-PDUs in order of the SNs, MAC-D PDU, or MAC-HS until receiving the HARQ delivery acknowledgment from the mobile station. After the HARQ delivery acknowledgment is received from the mobile station, the base station deletes the buffered data. When no ACK is received within a specified time or when NACK is sent from the mobile station, the base station retransmits the buffered data to the mobile station.

In process P6 of FIG. 4, the mobile station decomposes the MAC-HS PDU into MAC-D PDUs based on the sequence numbers of the packets in the MAC layer. In process P7 of FIG. 4 and at steps S41 through S44 of FIG. 5, the mobile station passes the MAC-D PDUs to the RLC layer. In process P8 of FIG. 4, the mobile station composes RLC SDU A from the UMD-PDUs in the RLC layer. The RLC SDU A is configured to be PDU A and is passed to the higher layer in process P9 of FIG. 4 and at step S45 of FIG. 5.

At step S38, the base station receives the delivery acknowledgment ACK from the mobile station. The base station then extracts the number of MAC-D PDUs multiplexed in the delivery-acknowledged MAC-HS PDU based on the above-mentioned N's value in the traffic management table. At step S39, the base station calculates Acked_Data_Sum according to equation

(1) below and records the calculated value in the traffic management table. The sum of higher layer data is unnecessary for a mobile station user as an end user. For this reason, the base station calculates Acked_Data_Sum by excluding link layer headers that are attached between apparatuses in the network.

$$\text{Acked\_Data\_Sum} = \{(N_1 * \text{Size\_1}) + (N_2 * \text{Size\_2}) + ... +$$

$$(N_n * \text{Size\_n})\} - \{(N * (\text{RLC\_HEADER} + \text{MAC\_HEADER})\} \tag{1}$$

In equation (1) , Size_n indicates the MAC-D PDU size. RLC_HEADER and MAC_HEADER in equation (1) are link layer headers and have fixed lengths. This parameter is notified to the base station by means of the above-mentioned traffic collection start request control signal. In operation, the MAC-D PDU size is equivalent to RLC UMD PDU and is given Semi-Static Attributes to be free from changing for each TTI.

Accordingly, Acked_Data_Sum can be also calculated using equation (2) below.

$$\text{Acked\_Data\_Sum} = N * \{\text{Size\_1 or Size\_2} - (\text{RLC\_HEADER}$$

$$+ \text{MAC\_HEADER})\} \tag{2}$$

Equation (2) expresses increasing the total number of bytes multiplexed to the TSN each time the delivery acknowledgment is received from the mobile station. As a result, this is equivalent to acquisition of the total number of downstream packets (i.e., Acked_Data_Sum) for a specified user (mobile station) during communication.

In this manner, there have been completed the data delivery of PDU A from the radio access network to the mobile station and the traffic collection process for the data delivery.

In process P1 of FIG. 4 and at step S51 of FIG. 5, the radio base station passes data unit PDU B in the higher layer as RLC UM data for RLC SDU B to the RLC layer.

In process P2 of FIG. 4 and at step S52 of FIG. 5, the radio base station decomposes the RLC SDU B into a plurality of UMD-PDUs. In the examples of FIGS. 4 and 5, RLC SDU B is halved. At this time, the base station controller assigns packet sequence numbers to the decomposed UMD-PDUs. The sequence numbers to be assigned here are SN=4 and SN=5 following SN=0 through SN=3 already assigned to the RLC SDU A. In process P3 of FIG. 4 and at steps S53 and S54 of FIG. 5, the base station controller passes the UMD-PDUs in order of the SNs to the MAC layer, i.e., the base station.

In process P4 of FIG. 4, the base station composes MAC-D PDU from the UMD-PDUs in the MAC layer, multiplexes the MAC-D PDU into MAC-HS PDU, and then attaches the header information to it. In process P5 of FIG. 4 and at step S55 of FIG. 5, the base station sends the MAC-HS PDU to the mobile station. The base station's scheduler determines the number of MAC-D PDUs to be sent to the mobile station at each TTI.

When receiving the MAC-HS PDU from the base station, the mobile station issues HARQ delivery acknowledgment in units of MAC-HS PDUs at step S56. In process P6 of FIG. 4 and at steps S61 and S62 of FIG. 5, the mobile station decomposes the MAC-HS PDU into MAC-D PDUs in the MAC layer. In process P7 of FIG. 4, the mobile station passes the MAC-D PDUs to the RLC layer. In process P8 of FIG. 4, the mobile station composes RLC SDU B from the UMD-PDUs in the RLC layer. The RLC SDU B is configured to be PDU B and is passed to the higher layer in process P9 of FIG. 4 and at step S63 of FIG. 5.

At step S56, the base station receives the delivery acknowledgment from the mobile station. The base station then extracts the number of MAC-D PDUs multiplexed in the delivery-acknowledged MAC-HS PDU based on the above-mentioned N's value in the traffic management table. At step S57, the base station calculates Acked_Data_Sum according to equation (1) or (2) as mentioned above and records the calculated value in the traffic management table.

In this manner, there have been completed the data delivery of PDU B from the radio access network to the mobile station and the traffic collection process for the data delivery.

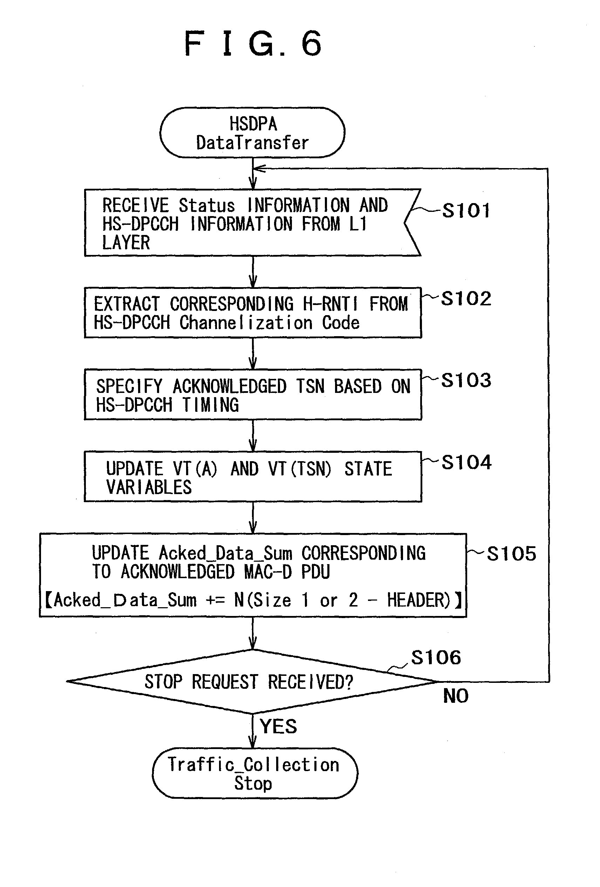

FIG. 6 shows a detailed flowchart for the traffic collection process at step S5 of FIG. 1. The flowchart in FIG. 6 especially shows a flow of processes in which the base station connects a delivery acknowledgment from the mobile station with H-ANTI for specifying an HS-DST. That is to say, the HARE ACK/NACK contains only 1-bit STATUS and does not have a logical identifier for connectionwith a specificmobile station (H-ANTI). For this reason, the base station according to the embodiment specifies a targeted mobile station (H-ANTI) using an upstream physical resource and an ACK/NACK delivery reception timing. The following describes a sequence of operations.

At step S101 of FIG. 6, a base station's traffic collection processing section 28 receives STATUS (status information) of the HARQ ACK/NACK information, resource information about HS-DPCCH, and ACK/NACK delivery reception timing information from the L1 layer (HARQ ACK/NACK reception function section 26). At step S101, the base station uses a prepared conversion table to convert a channelization code used for HS-DPCCH into H-RNTI (extracting H-RNTI from the conversion table).

At step S103, the base station extracts the TSN from downstream HSDPA transfer data based on the ACK/NACK delivery reception timing information for HS-DPCCH. At step S104, the base station updates VT (A) and VT (TSN) out of the Priority_Queue based state variables. At step S105, the base station updates the Acked_Data_Sum variable.

At step S106, the base station determines whether or not to receive a traffic collection stop request. If that request is not received, the base station returns process to step S101. If the request is received, the base station terminates the traffic collection process.

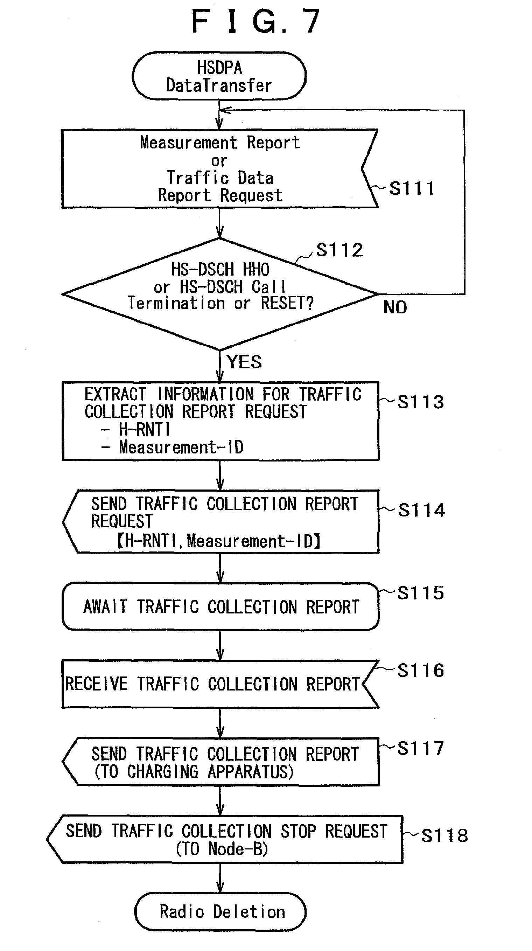

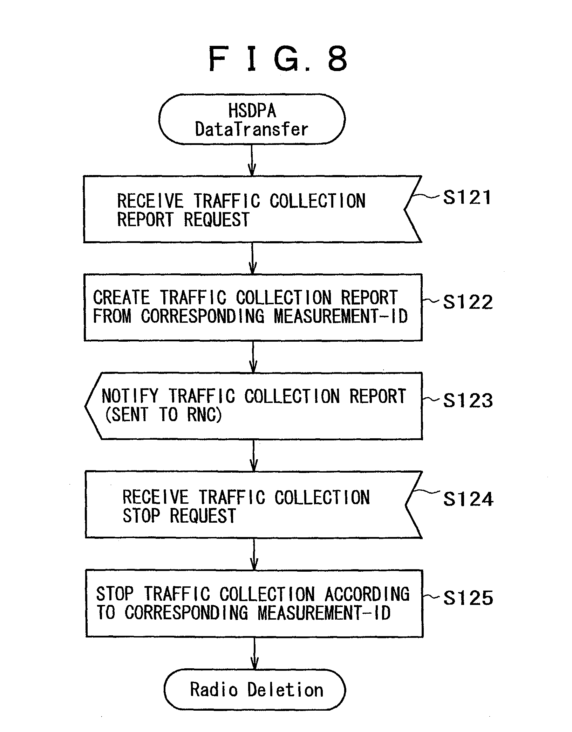

FIGS. 7 and 8 provide detailed flowcharts showing processes after receiving the charging process stop trigger at step S5 of FIG. 1 until the charging process stops. FIG. 7 shows the flowchart showing processes for the base station controller. FIG. 8 shows the flowchart showing processes for the base station.

First, the following describes the flowchart in FIG. 7 showing processes for the base station controller.

At step S111 of FIG. 7, the base station controller receives Measurement Report Request and Traffic Data Report Request. At step S112, the base station controller determines whether or not there occurs HS-DSCH handover (HHO) or a call disconnection request. If the result is YES, the base station controller proceeds to step S113 to extract information (mobile station' s H-RNTI or Measurement-ID associated with the handover or call disconnection request) needed for a traffic collection report request.

At step S114, the base station controller sends a traffic collection report provided with the H-RNTI or Measurement-ID to the base station. At step S115, the base station controller awaits the traffic collection report. At step S116, the base station controller receives the traffic collection report. At step S117, the base station controller sends the traffic collection report to the charging apparatus.

After sending the traffic collection report, the base station controller, at step S118, sends the above-mentioned Traffic Collection Stop Request to the base station. Further at step S118, the base station controller deletes the respective data after sending the Traffic Collection Stop Request.

For example, there may be a case where a handover occurs to change the base station. In such case, traffic is collected by base stations before and after the change due to the handover. The radio network system according to the embodiment is configured to send this traffic to the charging apparatus via the radio network controller. The charging apparatus totals the traffic collected by the base stations before and after the change due to the handover. At this time, the charging apparatus specifies a mobile station associated with the handover. Even if handover occurs to change the base station, the radio network system according to the embodiment can charge a user of the mobile station associated with the handover.

The following describes the flowchart in FIG. 8 showing processes for the base station.

At step S121 of FIG. 8, the base station receives the traffic collection report request from the base station controller. At step S122, the base station extracts the traffic corresponding to the Measurement-ID contained in the traffic collection report from the traffic management table. The base station uses the traffic to create a traffic collection report. At step S123, the base station sends the traffic collection report to the base station controller.

At step S124, the base station receives the traffic collection stop request from the base station controller. At step S125, the base station stops collecting the traffic corresponding to the Measurement-ID. Thereafter, the base station deletes the respective data.

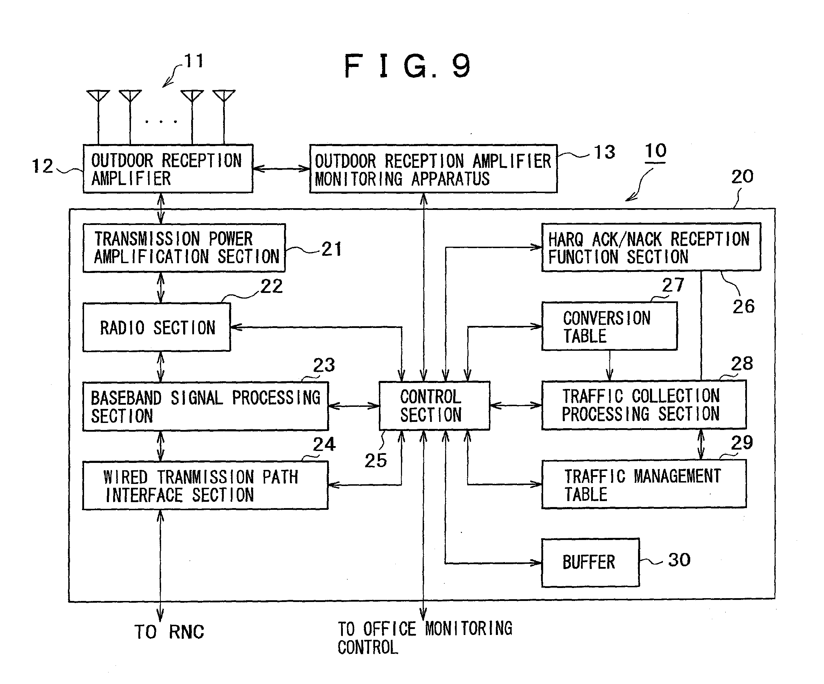

FIG. 9 shows a configuration of the base station according to an embodiment of the present invention.

In FIG. 9, a base station 10 according to the embodiment comprises: a plurality of antennas 11 capable of diversity reception; an outdoor reception amplifier 12 to amplify signals received by the antenna 11; an outdoor reception amplifier monitoring apparatus 13 to monitor operations of the outdoor reception amplifier 12; and a base station body 20.

The base station body 20 comprises: a transmission power amplification section 21; a radio section 22; a baseband signal processing section 23; awired transmissionpath interface section 24; a control section 25; an HARQ ACK/NACK reception function section 26; and a conversion table 27. In addition to this configuration, the base station body 20 further comprises: a traffic collection processing section 28; a traffic management table 29; and a buffer (storage means) 30 as a configuration for traffic collection according to the embodiment. The conversion table 27, the traffic collection processing section 28, and the buffer 30 may be included as a function section in the control section 25.

The wired transmission path interface section 24 interfaces the base station controller with the base station. The wired transmission path interface section 24 has the ATM (asynchronous transfer mode) processing function, the AAL (ATM adaptation layer) signal processing function, the service specific connection oriented protocol (SSCOP) function, and the like.

The baseband signal processing section 23 performs processes such as error correction coding, framing, data modulation, spread modulation, and the like for transmission signals supplied via the wired transmission path interface section 24. The baseband signal processing section 23 then transmits the processed signal to the radio section 22. Further, the baseband signal processing section 23 performs signal processes such as despreading, chip synchronization, error correction coding, data multiplexing/demultiplexing, maximum ratio combining for diversity handover between sectors, and the like for reception signals that are received by the antenna 11 and are supplied via the radio section 22.

The radio section 22 digital/analog converts a baseband spread signal, converts the signal into a radio frequency signal using orthogonal transformation, and transmits the signal to the transmission power amplification section 21. Further, The radio section 22 quasi-coherently detects a reception signal that is receivedby the antenna 11 and is supplied via the outdoor reception amplifier 12 and the like. The radio section 22 analog/digital converts the signal and transmits it to the baseband signal processing section 23.

The transmission power amplification section 21 amplifies the power of a transmission signal from the radio section 22 up to a required antenna input level.

The control section 25 provides control over sending or receiving call control signals from the base station controller, managing radio lines, establishing or releasing radio lines, and performing the traffic collection according to the embodiment.

The HARQ ACK/NACK reception function section 26 receives ACK/NACK information according to the above-mentioned HARQ and manages ACK/NACK delivery reception timings.

As mentioned above, the traffic collection processing section 28 is a function section to perform overall processes for the traffic collection in the base station according to the embodiment.

The conversion table 27 is used to convert the above-mentioned channelization code used for HS-DPCCH into H-RNTI.

The buffer 30 buffers UMD-PDUs, MAC-D PDU, or MAC-HS transmission unit the HARQ delivery acknowledgment (ACK) is received from the mobile station.

As mentioned above, the radio network system according to an embodiment of the present invention uses the RLC unacknowledged data transfer mode such as the R5 HSDPA compliant RLC UM to enable delivery of realtime critical data such as video streaming data. Further, the radio network system can collect traffic in packet switching services using the R5 HSDPA compliant RLC UM.

The above-mentioned embodiment is an example of the present invention. The present invention is not limited to the above-mentioned embodiment. It is further understood by those skilled in the art that various changes and modifications may be made in the present invention depending on designs and the like without departing from the technical concept and scope thereof. For example, embodiments of the present invention are not limited to R5 HSDPA systems compliant with 3GPP. Further, the radio network system is not limited to cellular phone systems. The base station according to embodiments of the present invention is not limited to base stations for the cellular phone systems. For example, embodiments of the present invention are also applicable to repeating apparatuses for various radio network systems provided with modes equivalent to the above-mentioned RLC unacknowledged data transfer mode. Moreover, embodiments of the present invention are also applicable to data deliveries that are independent of requests from users. Furthermore, traffic may be collected based on not only the number of packets, but also the communication

**EP 1 507 372 A1**

time.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

DRAWINGS

FIG. 1

S1 -- Complete position registration
S2 -- Complete DCCH establishment
S3 -- Establish HS-DSCH RAB
S11 -- Initialize traffic management table
S12 -- Set charging parameter
S15 -- Start charging process
S4 -- Start traffic collection
S17 -- Delivery confirmation information
S18 -- Traffic collection process
S5 -- Transfer HSDPA data
S6 -- Stop traffic collection
S19 -- Call disconnection, handover, etc.
S21 -- Create traffic report
S24 -- Stop traffic collection

FIG. 2

#1 -- Parameter name
#2 -- Usage
#3 -- Specify HS-DSCH user
#4 -- Specify timing to start the traffic collection
#5 -- MAC-D PDU size
#6 -- UMD PDU Header + MAC-D Header information
#7 -- Identify traffic collection
#8 -- Result of start process
#9 -- Traffic collection time
#10 -- Sum of acknowledged higher-order layer data
#11 -- Result of end process
#12 -- Duration information

FIG. 3

#1 -- Internal resource ID
#2 -- Measurement-ID
#3 -- MAC-D FLOW information
#4 -- UE Capabilities information
#5 -- HARQ Memory information
#6 -- HS-SCCH information
#7 -- Charging related information
#8 -- MAC-D Flow information
#9 -- Priority_Queue information
#10 -- Traffic collection status
#11 -- Duration information

#12 -- Priority_Queue based state variable
#13 -- Repetition count

FIG. 4

#1 -- Decompose
#2 -- Multiplex
#3 -- Header
#4 -- Compose

FIG. 5

#1 -- Quarter UMD-PDU
#2 -- Halve UMD-PDU

FIG. 6

S101 -- Receive Status information and HS-DPCCH information from L1 layer
S102 -- Extract corresponding H-RNTI from HS-DPCCH Channelization Code
S103 -- Specify acknowledged TSN based on HS-DPCCH timing
S104 -- Update VT(A) and VT(TSN) state variables
S105 -- Update Acked_Data_Sum corresponding to acknowledged MAC-D PDU
S106 -- Stop request received?

FIG. 7

S113 -- Extract information for traffic collection report request
S114 -- Send traffic collection report request
S115 -- Await traffic collection report
S116 -- Receive traffic collection report
S117 -- Send traffic collection report (to charging apparatus)
S118 -- Send traffic collection stop request (to Node-B)

FIG. 8

S121 -- Receive traffic collection report request
S122 -- Create traffic collection report from corresponding Measurement-ID
S123 -- Notify traffic collection report (sent to RNC)
S124 -- Receive traffic collection stop request
S125 -- Stop traffic collection according to corresponding Measurement-ID

FIG. 9

12 -- Outdoor reception amplifier
13-- Outdoor reception amplifier monitoring apparatus
21 -- Transmission power amplification section
22 -- Radio section
23 -- Baseband signal processing section
24 -- Wired transmission path interface section
25 -- Control section
26 -- HARQ ACK/NACK reception function section
27 -- Conversion table
28 -- Traffic collection processing section
29 -- Traffic management table
30 -- Buffer
制御部 -- Control section
RNC へ -- To RNC
局舎 - - To office monitoring control

## EP 1 507 372 A1

**Claims**

1. A radio communication system at least composed of a mobile station, a base station to make radio communication with said mobile station, and a radio communication controller to control radio communication between said mobile station and said base station,
   wherein said base station comprises:

   radio communication means for making radio communication with said mobile station;
   response signal reception means for interacting with signal transmission by said radio communication means to said mobile station and receiving a response signal returned from said mobile station;
   collection means for, when a signal is transmitted to said mobile station and then said response signal reception means receives a response signal from said mobile station, collecting the amount of signal transmitted to said mobile station from said radio communication means; and
   controller interface means for making signal communication with said radio communication controller and transmitting the amount of signal collected by said collection means to said radio communication controller.

2. The radio communication system according to claim 1,
   wherein said base station's radio communication means attaches header information to a signal to be transmitted to said mobile station; and
   wherein said collection means collects the amount of signal except said header information.

3. The radio communication system according to claim 1, further comprising:

   a totalizing apparatus for obtaining information about the amount of signal collected by said base station's collection means and totalizing information about the amount of signal by specifying a mobile station.

4. The radio communication system according to claim 3,
   wherein said totalizing apparatus, based on the total amount of signal for said specified mobile station, totalizes charges for a user of said mobile station.

5. The radio communication system according to claim 1,
   wherein said base station comprises:

   storage means for storing a signal to be transmitted to said mobile station; and
   control means for, when said response signal reception means cannot receive a response signal from said mobile station, retrieving a signal stored in said storage means and retransmitting the signal from said radio communication means to said mobile station.

6. A repeating apparatus which repeats a signal exchanged between a mobile station and a radio communication controller to control radio communication and makes radio communication with said mobile station, said repeating apparatus comprising:

   radio communication means for making radio communication with said mobile station;
   response signal reception means for interacting with signal transmission by said radio communication means to said mobile station and receiving a response signal returned from said mobile station;
   collection means for, when a signal is transmitted to said mobile station and then said response signal reception means receives a response signal from said mobile station, collecting the amount of signal transmitted to said mobile station from said radio communication means; and
   controller interface means for making signal communication with said radio communication controller and transmitting the amount of signal collected by said collection means to said radio communication controller.

7. The repeating apparatus according to claim 6,
   wherein said radio communication means attaches header information to a signal to be transmitted to said mobile station; and
   wherein said collection means collects the amount of signal except said header information.

8. The repeating apparatus according to claim 6 comprising:

storage means for storing a signal to be transmitted to said mobile station; and
control means for, when said response signal reception means cannot receive a response signal from said mobile station, retrieving a signal stored in said storage means and retransmitting the signal from said radio communication means to said mobile station.

EP 1 507 372 A1

# F I G. 1

UE ... Node-B ... RNC

- COMPLETE POSITION REGISTRATION — S1
- COMPLETE DCCH ESTABLISHMENT — S2
- RRC:Activate PDP Context Request — S3
- NBAP:Radio Link Reconfiguration Prepare
- NBAP:Radio Link Reconfiguration Ready
- QAAL2:Establishment Request
- QAAL2:Establishment Confirm
- NBAP:Radio Link Reconfiguration Commit
- RRC:Radio Bearer Setup
- RRC:Radio Bearer Setup Complete
- ESTABLISH HS-DSCH RAB
- Traffic Collection Start Request — S4 / S10
- S11 — INITIALIZE TRAFFIC MANAGEMENT TABLE
- S12 — SET CHARGING PARAMETER
- Traffic Collection Start Response — S13
- S14 — CFN=Activation_Time? — NO
- YES
- S15 — START CHARGING PROCESS
- START TRAFFIC COLLECTION
- HSDPA Data Transfer — S5
- DELIVERY CONFIRMATION INFORMATION — S16
- S18 — TRAFFIC COLLECTION PROCESS
- TRANSFER HSDPA DATA — S19
- S17
- CALL DISCONNECTION, HANDOVER, ETC.
- S6 — Traffic Collection Report Request — S20
- S21 — CREATE TRAFFIC REPORT
- Traffic Collection Report — S13
- Traffic Collection Stop Request — S23
- S24 — STOP TRAFFIC COLLECTION
- Traffic Collection Stop Response
- STOP TRAFFIC COLLECTION — S25

EP 1 507 372 A1

# F I G. 2

| PARAMETER NAME | USAGE |
|---|---|
| Traffic Collection Start Request | |
| H-RNTI | SPECIFY HS-DSCH USER |
| Activation time(CFN) | SPECIFY TIMING TO START THE TRAFFIC COLLECTION |
| MAC-D PDU Size(Bits) | MAC-D PUD SIZE |
| Header Info(Bits) | UMD PDU Header+MAC-D HEADER INFORMATION |
| Traffic Collection Start Response | |
| H-RNTI | SPECIFY HS-DSCH USER |
| Measurement-ID | IDENTIFY TRAFFIC COLLECTION |
| RESULT | RESULT OF START PROCESS |
| Traffic Collection Report Request | |
| H-RNTI | SPECIFY HS-DSCH USER |
| Measurement-ID | IDENTIFY TRAFFIC COLLECTION |
| Traffic Collection Report | |
| H-RNTI | SPECIFY HS-DSCH USER |
| Measurement-ID | IDENTIFY TRAFFIC COLLECTION |
| Duration INFORMATION | TRAFFIC COLLECTION TIME |
| Acked_Data_Sum(Bytes) | SUM OF ACKNOWLEDGED HIGHER-ORDER LAYER DATA |
| Traffic Collection Stop Request | |
| H-RNTI | SPECIFY HS-DSCH USER |
| Measurement-ID | IDENTIFY TRAFFIC COLLECTION |
| Traffic Collection Stop Response | |
| H-RNTI | SPECIFY HS-DSCH USER |
| Measurement-ID | IDENTIFY TRAFFIC COLLECTION |
| RESULT | RESULT OF END PROCESS |

14

# F I G. 3

| H-RNTI#0 |
|---|
| H-RNTI#1 |
| H-RNTI#2 |
| ⋮ |
| ⋮ |
| ⋮ |
| H-RNTI#N |

| INTERNAL RESOURCE ID |
|---|
| Measurement-ID |
| MAC-D FLOW INFORMATION |
| UE Capabilities INFORMATION |
| HARQ Memory INFORMATION |
| HS-SCCH INFORMATION |
| CHARGING RELATED INFORMATION |

| MAC-D FLOW INFORMATION |
|---|
| Priority_Queue INFORMATION |

| TRAFFIC COLLECTION STATUS |
|---|
| DURATION INFORMATION |

Priority_Queue BASED STATE VARIABLE

| REPETITION COUNT (n) |
|---|
| Acked_Data_Sum |

| Queue_ID |
|---|
| VT(TSN) |
| VT(A) |
| N |

EP 1 507 372 A1

# F I G. 4

UTRAN

| Higher Layer PDU A | Higher Layer PDU B | ← P1

RLC Layer
- RLC SDU A
- RLC SDU B
- DECOMPOSE
- DECOMPOSE
- RLC SDU A
- RLC SDU B
- SN=0 | SN=1 | SN=2 | SN=3 | SN=4 | SN=5

← P2

← P3

MAC Layer
MAC-D PDU   MAC-D PDU
MULTIPLEX   MULTIPLEX
| TSN=0 | MAC-HS SDU |   | TSN=0 | MAC-HS SDU |
MAC-HS PDU   MAC-HS PDU

← P4

P5

| HEADER | MAC-HS SDU | HEADER | MAC-HS SDU |

UE

P9 → | Higher Layer PDU A | Higher Layer PDU B |

P8 →

RLC Layer
- RLC SDU A
- RLC SDU B
- COMPOSE
- COMPOSE
- RLC SDU A
- RLC SDU B
- SN=0 | SN=1 | SN=2 | SN=3 | SN=4 | SN=5

P7 →

P6 →

MAC Layer
MAC-D PDU   MAC-D PDU
DECOMPOSE   DECOMPOSE
| TSN=0 | MAC-HS SDU |   | TSN=0 | MAC-HS SDU |
MAC-HS PDU   MAC-HS PDU

EP 1 507 372 A1

# FIG. 5

EP 1 507 372 A1

# F I G. 6

```
        ┌─────────────────────┐
        │        HSDPA        │
        │     DataTransfer    │
        └─────────────────────┘
                   │
                   ▼
   ┌────────────────────────────────┐
   │ RECEIVE Status INFORMATION AND  │ ~S101
   │ HS-DPCCH INFORMATION FROM L1    │
   │ LAYER                           │
   └────────────────────────────────┘
                   │
                   ▼
   ┌────────────────────────────────┐
   │ EXTRACT CORRESPONDING H-RNTI FROM│ ~S102
   │ HS-DPCCH Channelization Code    │
   └────────────────────────────────┘
                   │
                   ▼
   ┌────────────────────────────────┐
   │ SPECIFY ACKNOWLEDGED TSN BASED ON│ ~S103
   │ HS-DPCCH TIMING                 │
   └────────────────────────────────┘
                   │
                   ▼
   ┌────────────────────────────────┐
   │ UPDATE VT(A) AND VT(TSN) STATE  │ ~S104
   │ VARIABLES                       │
   └────────────────────────────────┘
                   │
                   ▼
   ┌────────────────────────────────┐
   │ UPDATE Acked_Data_Sum CORRESPONDING│ ~S105
   │ TO ACKNOWLEDGED MAC-D PDU       │
   │【Acked_Data_Sum += N(Size 1 or 2 - HEADER)】│
   └────────────────────────────────┘
                   │
                   ▼
         ◇ STOP REQUEST RECEIVED? ◇ ~S106 ──NO──┐
                   │ YES
                   ▼
        ┌─────────────────────┐
        │  Traffic_Collection │
        │         Stop        │
        └─────────────────────┘
```

# F I G. 7

```
        ┌─────────────────────┐
        │        HSDPA        │
        │     DataTransfer    │
        └─────────────────────┘
```

Measurement Report
or
Traffic Data
Report Request   ~S111

HS-DSCH HHO
or HS-DSCH Call
Termination or RESET?   ~S112   NO

YES

EXTRACT INFORMATION FOR TRAFFIC
COLLECTION REPORT REQUEST
 - H-RNTI
 - Measurement-ID   ~S113

SEND TRAFFIC COLLECTION REPORT
REQUEST
 【H-RNTI, Measurement-ID】   ~S114

AWAIT TRAFFIC COLLECTION REPORT   ~S115

RECEIVE TRAFFIC COLLECTION REPORT   ~S116

SEND TRAFFIC COLLECTION REPORT
(TO CHARGING APPARATUS)   ~S117

SEND TRAFFIC COLLECTION STOP REQUEST
(TO Node-B)   ~S118

```
        ┌─────────────────────┐
        │    Radio Deletion   │
        └─────────────────────┘
```

EP 1 507 372 A1

# F I G. 8

```
        ( HSDPA
          DataTransfer )
              |
              v
  [ RECEIVE TRAFFIC COLLECTION    ]  ~ S121
  [ REPORT REQUEST                ]
              |
              v
  [ CREATE TRAFFIC COLLECTION REPORT   ]  ~ S122
  [ FROM CORRESPONDING MEASUREMENT-ID  ]
              |
              v
  [ NOTIFY TRAFFIC COLLECTION REPORT   ]  ~ S123
  [ (SENT TO RNC)                      ]
              |
              v
  [ RECEIVE TRAFFIC COLLECTION    ]  ~ S124
  [ STOP REQUEST                  ]
              |
              v
  [ STOP TRAFFIC COLLECTION ACCORDING  ]  ~ S125
  [ TO CORRESPONDING MEASUREMENT-ID    ]
              |
              v
        ( Radio Deletion )
```

# F I G. 9

European Patent
Office

**EUROPEAN SEARCH REPORT**

Application Number

EP 04 25 4640

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | 3GPP: "3GPP TS 32.215 V5.4.0 RELEASE 5: CHARGING DATA DESCRIPTION FOR THE PACKET SWITCHED DOMAIN" 3RD GENERATION PARTNERSHIP PROJECT, TECHNICAL SPECIFICTION GROUP SERVICES AND SYSTEM ASPECTS, TELECOMMUNICATION MANAGEMENT, CHARGING MANAGEMENT, [Online] vol. 5.4.0, no. 32.215, June 2003 (2003-06), pages 1-66, XP002305220 SOPHIA ANTIPOLIS, FRANCE Retrieved from the Internet: URL:www.3gpp.org> [retrieved on 2004-11-11] * page 7, line 1 - line 11 * * page 13 - page 15 * * page 27, line 1 - page 28, line 10 * * page 30, line 32 - page 31, line 10 * * page 41 * ----- | 1-8 | H04L12/56 H04Q7/38 |
| | -/-- | | |
| | | | TECHNICAL FIELDS SEARCHED (Int.Cl.7) |
| | | | H04L H04Q |

The present search report has been drawn up for all claims

| Place of search | Date of completion of the search | Examiner |
|---|---|---|
| Munich | 12 November 2004 | MOHAMMADIAN SANTANDE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 04 25 4640

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | 3GPP: "3GPP TS 32.200 V5.4.0 RELEASE 5: CHARGING PRINCIPLES" 3RD GENERATION PARTNERSHIP PROJECT, TECHNICAL SPECIFICATION GROUP SERVICES AND SYSTEM ASPECTS, TELECOMMUNICATION MANAGEMENT, CHARGING MANAGEMENT, [Online] vol. 5.4.0, no. 32.200, June 2003 (2003-06), pages 1-84, XP002305221 SOPHIA ANTIPOLIS, FRANCE ISSN: 4 Retrieved from the Internet: URL:www.3gpp.org> [retrieved on 2004-11-11] * page 7 * * page 14 - page 15 * * page 19 - page 24 * * page 30 * * page 58 - page 65 * * page 74 - page 76 * ----- | 1-8 | |
| A | EP 1 134 931 A (SONY CORP) 19 September 2001 (2001-09-19) * abstract; figures 1-5 * * paragraph [0057] - paragraph [0084] * ----- | 1-8 | TECHNICAL FIELDS SEARCHED (Int.Cl.7) |

The present search report has been drawn up for all claims

| Place of search | Date of completion of the search | Examiner |
|---|---|---|
| Munich | 12 November 2004 | MOHAMMADIAN SANTANDE |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

EP 1 507 372 A1

## ANNEX TO THE EUROPEAN SEARCH REPORT
## ON EUROPEAN PATENT APPLICATION NO.

EP 04 25 4640

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2004

| Patent document cited in search report | | Publication date | Patent family member(s) | | Publication date |
|---|---|---|---|---|---|
| EP 1134931 | A | 19-09-2001 | JP | 2001268077 A | 28-09-2001 |
| | | | CN | 1314763 A | 26-09-2001 |
| | | | EP | 1134931 A2 | 19-09-2001 |
| | | | US | 2001053683 A1 | 20-12-2001 |